# EUROPEAN PATENT SPECIFICATION

(11) **EP 1 770 909 B1**
(45) Date of publication and mention of the grant of the patent: **23.12.2009**
(21) Application number: 05766166.2
(22) Date of filing: 19.07.2005
(51) Int. Cl.: H04L 12/28, H04L 12/14, H04L 29/06, H04M 3/42, H04W 4/24

(54) **Connection of a subscriber terminal to an Internet Service Provider**
Verbindung eines Teilnehmerendgerätes zu einem Internet-Dienstanbieter
Connexion d'un terminal d'abonné à un Fournisseur de Services Internet

(30) Priority: 20.07.2004 JP 2004212226
(43) Date of publication of application: 04.04.2007
(73) Proprietor: International Business Machines Corporation, Armonk, New York 10504 (US)
(72) Inventor: KAMIJO, Noboru, Tokyo Research Laboratory, Yamato-shi, Kanagawa 2428502 (JP); AIHARA, Toru, Tokyo Research Laboratory, Yamato-shi, Kandagawa 2428502 (JP); OCHIAI, Kazumasa, IBM Business Cons. Service Ltd., Tokyo 1068711 (JP)
(74) Representative: Ling, Christopher John
(86) International application number: PCT/JP2005/013236
(87) International publication number: WO 2006/009136

(56) References cited:
- WO-A-00/39987
- WO-A-02/091723
- JP-A- 2003 134 144
- JP-A- 2004 200 735
- JP-A- 2004 200 857
- US-A1- 2001 053 694

## Description

### Field of the invention

The present invention relates to a communication apparatus, system and method. More particularly, the invention relates to a communication apparatus, system and method for connecting personal computers and the like to a communication line provided by an Internet Service Provider.

### Background of the Invention

In recent years, as broadband communication technologies such as ADSL (Asymmetric Digital Subscriber Line) and FTTH (Fiber-to-the-Home) have been developing at a high pace and provided at lower prices, broadband utilization at home has been rapidly proliferating. Also, with the emergence of digital consumer electronics such as digital television set, DVD recorder and home server, home LAN (Local Area Network) is gaining still more widespread use.

Meanwhile, the release of communication devices compliant with IEEE 802.11b standard has lead to the popularization of wireless LAN, which does not need cabling and allows equipment location to be easily changed. Since the coverage area of a wireless LAN access point extends for several tens of meters radius of the access point, in many cases radio waves can be received outside the premise of a house when such an access point is installed within a home.

A survey on the trend in WEB access at home has shown that users in broadband environments utilize WEB for about 17 hours per month on average. That is, even if their sleeping hours are excluded in calculation, the users employ only several percent of the maximum available time. In addition, as the maximum communication speed of ADSL has reached 45 Mbps and that of FTTH 100 Mbps, most of communication bands are in fact unused unless high definition video contents and the like is downloaded.

Zero Configuration Wireless feature provided by Windows XP from Microsoft Corporation automatically detects a wireless LAN access point and makes settings for communication with that access point. The feature allows users to connect to a free access point and the like installed at public places with more ease.

Also, telephone sets have been marketed that include wireless LAN client features and provide VoIP (Voice over IP) capability for making voice calls utilizing an IP network. VoIP providers have servers on the Internet, providing a telephone set with calling functions as long as it can connect to the Internet, regardless of how it connects. Moreover, for activities within a business, employees can now safely connect to an intranet via the Internet along with the improvement of VPN technology and the like.

In light of such current situations as outlined above, techniques for providing a third party with surplus bandwidth of a wireless LAN have been proposed. Published Unexamined Patent Application (PUPA) No. 2002-344511 discloses a technique that charges a third party based on the amount of communication lines provided to the party. Published Unexamined Patent Application (PUPA) No. 2003-169085 proposes a technique that permits only a third party who has been authorized in advance to use surplus bandwidth. Published Unexamined Patent Application (PUPA) No. 2004-64536 proposes a technique that improves convenience for subscribers by having a plurality of subscribers who have subscribed to the same communication line provider utilize each other's access point.

However, the techniques of PUPA 2002-344511 and PUPA 2003-169085 assume the authentication of a third party who wants to use surplus bandwidth. Thus, with those techniques, burdensome tasks such as user registration are often required before using surplus bandwidth. These techniques also assume that users are charged according to their utilization time and the like. However, the explosive popularization of the Internet is attributed to the fact that with the Internet everyone can freely get information that he/she wants mostly free of charge, and techniques that are opposed to such feature of the Internet may likely not be accepted widely.

In addition, the technique according to PUPA 2004-64535 is based on connection by line subscribers and cannot allow connection by a non-subscriber who happens to pass by a subscriber's premises.

PCT Patent Application 02/091723A discloses a unified messaging communication system capable of being used by several users. Messages addressed to a user are stored in a computer for later enquiry by the user. The messages can be sent in any one of a number of different message transmission protocols.

US Patent Application 2001/0053694A1 discloses a network system which provides each terminal user with differentiated service, dynamically changing services profiles even in the middle of a communication session.

### Disclosure of the invention

The invention provides in its first embodiment a communication apparatus for connecting each of a plurality of information processing apparatuses to a communication line provided by an ISP (Internet Service Provider) by wirelessly communicating with each of the plurality of information processing apparatuses, comprising a subscriber terminal identification unit for determining whether or not each of the plurality of information processing apparatuses is managed by a subscriber to the ISP who has been permitted based on contract with the ISP to install the communication apparatus and connect to the communication line, and communication unit for wirelessly communicating with each of the plurality of information processing apparatuses giving higher priority to a subscriber terminal that is an information processing apparatus managed by a subscriber than to a non-subscriber terminal that is an information processing apparatus not being a subscriber terminal; a communication method using the communication apparatus: a program for causing a computer to function as the communication apparatus; a recording medium having the program recorded thereon; a communication system having the communication apparatus: and a communication service method using the communication system.

According to the invention, only an unused band of a communication line subscriber can be safely provided to a third party at no charge.

### Brief Description of the Drawings

The invention will now be described, by way of example only, with refence to the accompanying drawings, in which:
Figure 1 shows a configuration of communication system 10;
Figure 2 is a business flow for a communication service method using the communication system 10;
Figure 3 shows a first configuration of the wireless LAN communication device 20;
Figure 4 shows second and third configurations of the wireless LAN communication device 20;
Figure 5 shows a configuration of ISP server system 60 as an example of server device of the invention;
Figure 6 shows a processing flow up to when the wireless LAN communication device 20 starts communication with a non-subscriber terminal;
Figure 7 shows a processing flow for the wireless LAN communication device 20 that continues from Figure 6;
Figure 8 shows details of communication in the second configuration of the wireless communication device 20;
Figure 9 shows details of communication in the third configuration of the wireless LAN communication device 20;
Figure 10 is a processing flow for the ISP server system 60;
Figure 11 is a screen display for the user to odder his unused band and enable communication with a non-subscriber terminal on the wireless LAN communication device 20; and
Figure 12 shows an example of hardware configuration of computer 500 serving as the ISP server system 60.

### Detailed Description of the Invention

Figure shows a configuration of a communication system 10. The communication system 10 includes a wireless LAN communication device 20, a subscriber terminal 30, and a printer 40 that are provided within the premises of an ISP (Internet Service Provider) subscriber (hereinafter "subscriber user"). The communication system 10 also includes a non-subscriber terminal 50 managed by an individual other than subscriber users (hereinafter "general user"). The communication system 10 also has an ISP server system 60 that is connected to the wireless LAN communication device 20 via a communication line, and a VPN server device 70 and IP phone server 80 that are connected to the ISP server system 60 via a network 65.

The wireless LAN communication device 20 connects the subscriber terminal 30, printer 40, and non-subscriber terminal 50 to a communication line provided by an ISP by wirelessly communicating with them. And the wireless LAN communication device 20 connects the subscriber terminal 30 managed by a subscriber user to the communication line in preference to the non-subscriber terminal 50. The non-subscriber terminal 50 receiving streaming video data will experience communication delay, which causes jerky motion or frame loss, when the subscriber terminal 30 is a large amount of data, for example. For the wireless LAN communication device 20, three configurations are possible, which will be described in detail later.

The wireless LAN communication device 20 displays advertisements requested by predetermined advertisers on the display screen of the non-subscriber terminal 50, e.g., periodically. The subscriber terminal 30 and non-subscriber terminal 50 may connect to the Internet via the ISP server system 60 and utilize services provided by the VPN server device 70 and IP phone server device 80.

The communication line over which the wireless LAN communication device 20 connect to the ISP server system 60 may be an Internet connection line such as an ADSL (Asynchronous Digital Subscriber Line), FTTH (Fiber to The Home), high-speed power line communication (PLC: Power Line Communication), or cable TV line. The subscriber terminal 30, printer 40, and non-subscriber terminal 50 are examples of information processing devices according to the invention, and more specifically, may be personal computers, printers, mobile phones, PDAs (Personal Digital Assistants), or digital consumer electronics. In the description below, the subscriber terminal 30 will be described as a representative of information processing device managed by a subscriber user out of the subscriber terminal 30 and printer 40.

A subscriber to an ISP refers to an individual who has made with the ISP company contract to pay a charge for provision of a communication line by the ISP and is permitted to connect to the communication line by installing the wireless LAN communication device 20 based on the contract. The network 65 may be a public network such as the Internet or a private network such as a LAN (Local Area Network) provided by the ISP company.

Thus, the communication system 10 of the embodiment is a system for offering an unused band within a communication bandwidth for ISP subscribers to general users who have not subscribed to the ISP. In this process, control is exercised so that communication by a subscriber user is not hindered by communication by a general user, and a subscriber user who offered his unused band is paid appropriate compensation in accordance with the fee for an advertisement that is displayed to the general user.

The communication between the wireless LAN communication device 20 and the subscriber terminal 30, printer 40, and non-subscriber terminal 50 is not limited to wireless communication. For instance, the subscriber terminal 30, printer 40, and subscriber terminal 50 may each communicate with another communication device other than the wireless LAN communication device 20 via wired communication such as high-speed power line communication. In that case, the non-subscriber terminal 50 can utilize an surplus bandwidth of communication between that communication device and the subscriber terminal 30 by connecting via wire to a power line already installed within the premises.

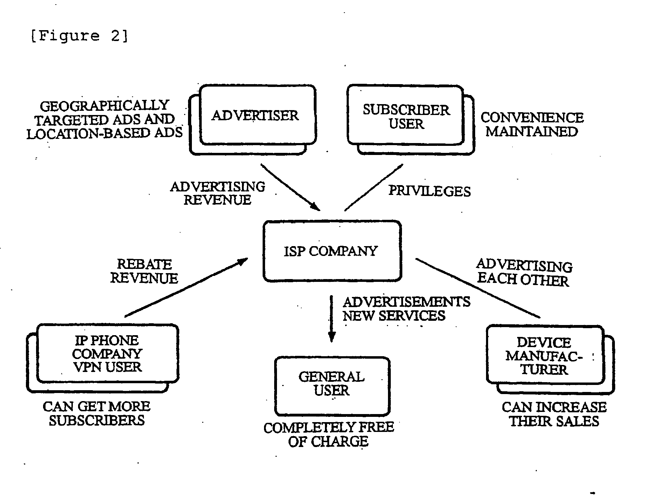

Figure 2 shows a business flow in a communication service method using the communication system 10. The communication system 10 of the embodiment is intended to provide subscriber users with privileges such as discount of line usage fee and general users with free-of-charge Internet connection. The communication system 10 is also intended to provide ISP companies with benefit of increasing their subscribers and various commission revenues as well as opportunity for advertising the ISP companies themselves.

The communication system 10 is also intended to provide device manufacturers of the wireless LAN communication device 20 with benefit of increasing sales of the device as well as opportunity for advertising the manufacturers. The communication system 10 is also intended to provide advertisers with new advertisement media like geographically targeted ads and location-based ads that are appropriate for the location of the wireless LAN communication device 20. The communication system 10 is also intended to provide VPN users and IP phone companies with benefit of improving convenience in their services and increasing their subscribers. The communication system 10 is further intended to benefit the public by effectively utilizing radio band.

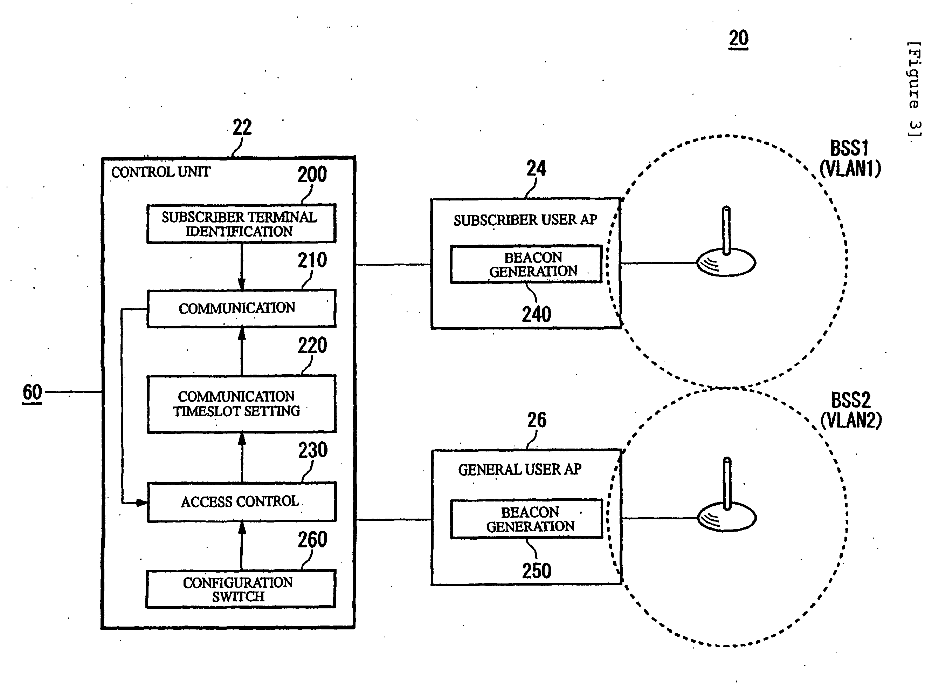

Figure 3 shows a first configuration of the wireless LAN communication device 20. The wireless LAN communication device 20 has a control unit 22, subscriber user AP 24, and non-subscriber user AP 26. The control unit 22 connects the subscriber user AP 24 and the non-subscriber user AP 26 to the ISP server system 60. The subscriber user AP 24 wirelessly communicates with the subscriber terminal 30 and printer 40. The non-subscriber user AP 26 wirelessly communicates with the non-subscriber terminal 50. The control unit 22 gives higher priority to the communication between the subscriber user AP 24 and the ISP server system 60 than communication between the non-subscriber user AP 26 and the ISP server system 60.

More specifically, the control unit 22 has a subscriber terminal identification unit 200, communication unit 210, communication timeslot setting unit 220, access control setting unit 230, and configuration switch 260. The subscriber terminal identification unit 200 determines whether or not each of a plurality of information processing devices is managed by a subscriber who has been permitted to set the wireless LAN communication device 20 and connect to the communication line based on his contract with the ISP. For example, the subscriber terminal identification unit 200 may determine that an information processing device is a subscriber terminal if the information processing device performs encrypted communication that is based on an encryption key defined between the wireless LAN communication device 20 and the subscriber terminal 30. As an example, the subscriber terminal identification unit 200 may identify an information processing device as a subscriber terminal if the device specifies a WEP key that has been preset for the subscriber user AP 24. Alternatively, the subscriber terminal identification unit 200 may determine that a destination information processing device is a subscriber terminal 30 when a MAC (Media Access Control) address specific to the information processing device corresponds with that of the subscriber terminal 30 that has been pre-registered.

As has been described, an information processing device managed by a subscriber is an information processing device in which information for authenticating the subscriber is input and set, for example. An information processing device managed by a non-subscriber is an information processing device in which given information that is open to both subscribers and non-subscribers is input and set.

The communication unit 210 communicates with the subscriber terminal 30 but not with the non-subscriber terminal 50 when it is set to prohibit communication between the wireless LAN communication device 20 and non-subscriber terminal 50. On the other hand, the communication unit 210 wirelessly communicates with both the subscriber terminal 30 and non-subscriber terminal 50 giving higher priority to the subscriber terminal 30 when it is set to permit communication between the wireless LAN communication device 20 and non-subscriber terminal 50. For example, the communication unit 210 communicates with subscriber terminal 30 when it detected data to deliver to the subscriber terminal 30 and communicates with non-subscriber terminal 50 when it has detected no data to deliver to the subscriber terminal 30 so that it communicates with both the subscriber terminal 30 and non-subscriber terminal 50 giving a higher priority to the subscriber terminal 30.

More specifically, through the subscriber user AP 24 and non-subscriber user AP 26, the communication unit 210 uses different wireless communication networks to communicate with the subscriber terminal 30 and the non-subscriber terminal 50. Here, the communication timeslot setting unit 220 may set the timeslot from the restart of communication with the subscriber terminal 30 to its pause and detection of a communication request from the non-subscriber terminal 50 to be longer than the timeslot from the restart of the communication with the non-subscriber terminal 50 to its pause and detection of a communication request from the subscriber terminal 30.

Alternatively, when the communication unit 210 communicates with the subscriber terminal 30 in TCP of TCP/IP protocol, the subscriber terminal 30 can communicate with the communication unit 210 with higher priority than the non-subscriber terminal 50 by delaying the delivery of ACK packet for the non-subscriber terminal 50 from that for the subscriber terminal 30, where ACK packet indicates the delivery of a TCP packet. As a further example, the communication unit 210 may obtain blocked addresses, which is a destination address to which the subscriber terminal 30 is prohibited from communicating, from the ISP server system 60 periodically (or every time blocked addresses are updated). In that case, the communication unit 210 prevents communication from the subscriber terminal 30 to the blocked addresses and permits communication from the non-subscriber terminal 50 to the blocked addresses.

Also, the communication unit 210 establishes a VLAN (Virtual LAN) with information processing devices communicating with the subscriber user AP 24. This VLAN is referred to as VLAN 1. Similarly, the communication unit 210 establishes VLAN 2 with information processing devices communicating with the non-subscriber user AP 26. This can hide information in the subscriber terminal and the non-subscriber terminal from each other. Moreover, the communication unit 210 may provide security features such as encryption of communicated content for the subscriber terminal 30 but not for the non-subscriber terminal 50.

The access control setting unit 230 changes the setting of whether or not to permit communication between the non-subscriber terminal 50 and the wireless LAN communication device 20 based on input by a user of the subscriber terminal 30 on a configuration screen for changing settings of wireless communication from the subscriber terminal 30 to the wireless LAN communication device 20. The access control setting unit 230 may also perform the setting of whether or not to permit communication between the non-subscriber terminal 50 and the wireless LAN communication device 20 based on the operation by the user with the configuration switch 260 that is physically provided as a piece of hardware.

The subscriber user AP 24 is a stationary or card-type wireless LAN access point, connected to the control unit 22 with a LAN cable and the like. Alternatively, the subscriber user AP 24 may be plugged into a dedicated slot of the control unit 22. And the subscriber user AP 24 communicates with the subscriber terminal 30 over a first wireless communication network.

Here, the wireless communication network is a network such as compliant with IEEE802.11b/a/g, for example, and is a BSS (Basic Service Set) associated with a single set of network identification information (e.g., SSID). A plurality of different wireless communication networks refer to wireless communication networks that have different network identification information (e.g., ESSID). In addition, such wireless communication networks may have different radio frequency bands used for communication. In the following, the first wireless communication network will be referred to as BSS1 and the second wireless communication network will be referred to as BSS2. The subscriber user AP 24 has a beacon generation unit 240 for transmitting beacon for synchronizing communication in BSS1. Specifically, the beacon generation unit 240 transmits beacon that does not include SSID for BSS1 to information processing devices within the coverage area of BSS1.

On the other hand, the non-subscriber user AP 26 communicates with the non-subscriber terminal 50 over the second wireless communication network. Here, the second wireless communication network is referred to BSS2. The non-subscriber user AP 26 has a beacon generation unit 250 for transmitting beacon for synchronizing communication in BSS2. Specifically, the beacon generation unit 250 periodically transmits beacon that includes SSID for BSS2 to information processing devices within the coverage area of BSS2.

As has been described and shown in the drawing, the wireless LAN communication device 20 has a plurality of wireless LAN access points that are capable of communication in parallel with others. And the wireless LAN communication device 20 can give higher priority to communication by a subscriber terminal than communication by a non-subscriber terminal by controlling communication with each of the wireless LAN access points through the control unit 22. With the configuration shown in the Figure 3, implementation and maintenance of the wireless LAN communication device 20 can be facilitated because existing access points can be utilized without modification.

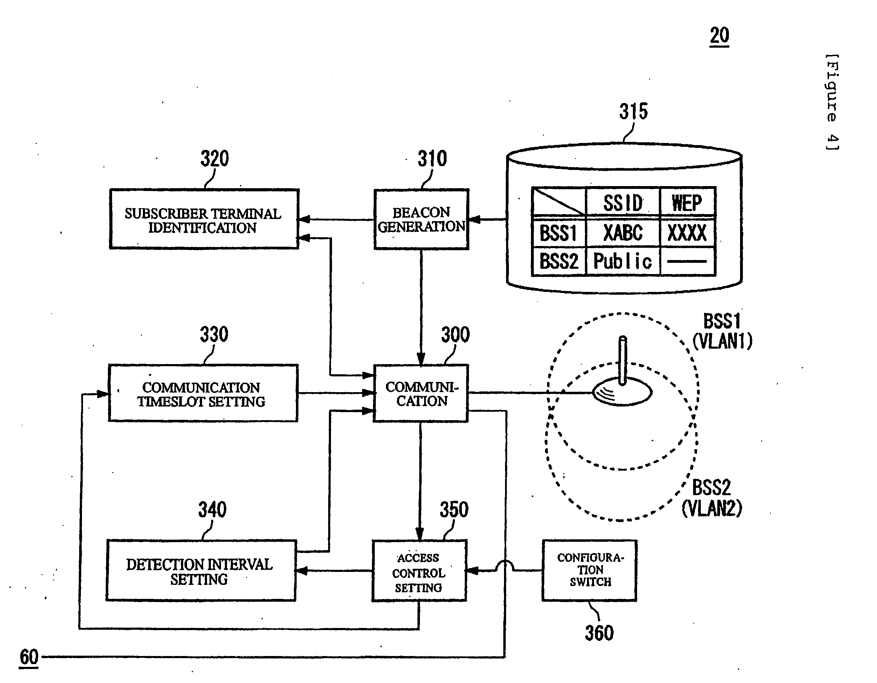

Figure 4 shows second and third configurations of the wireless LAN communication device 20. Unlike the first configuration, in these configurations, the wireless LAN communication device 20 manages two BSSs by having a single wireless LAN access point serve as a plurality of wireless LAN access points by way of time division. The frequency bands used by the two BSSs may be different. In other words, the wireless LAN communication device 20 may simulate two BSSs by periodically repeating frequency hopping. In the description below, the configuration in which different frequency bands are used for the two BSSs will be referred to as the second configuration and the one in which the same frequency band is used for the two BSSs will be referred to as the third configuration.

The wireless LAN communication device 20 has a communication unit 300, beacon generation unit 310, network DB 315, subscriber terminal identification unit 320, communication timeslot setting unit 330, detection interval setting unit 340, access control setting unit 350, and configuration switch 360. The communication unit 300 communicates with a plurality of information processing devices using any of wireless communication networks that have different frequency bands or SSIDs.

Specifically, the communication unit 300 sends data received from the ISP server system 60 to the subscriber terminal 30 or non-subscriber terminal 50 using the first or the second wireless communication network. As an example, the communication unit 300 may make the buffer for storing communication packets addressed to the subscriber terminal 30 larger in size than one for storing communication packets addressed to the non-subscriber terminal 50. And the communication unit 300 discards packets overflowing each of the buffers, for example. This can give higher priority to communication by the subscriber terminal than the non-subscriber terminal in downlink from the communication line provided by the ISP to the information processing device.

On the other hand, the communication unit 300 determines whether it has received a communication request from the subscriber terminal 30 in the first wireless communication network (BSS1) and from the non-subscriber terminal 50 in the second wireless communication network (BSS2) at a regular interval. By making the interval different for BSS1 and BSSs2, for example, it is possible to give higher priority to communication by the subscriber terminal than the non-subscriber terminal in uplink from the information processing device to the communication line provided by the ISP.

The beacon generation unit 310 directs the communication unit 300 to transmit beacon that does not include SSID for BSS1 to information processing devices within the coverage area of BSS1. Meanwhile, the beacon generation unit 310 periodically transmits beacon including SSID for BSS2 to information processing devices within the coverage area of BSS2. The subscriber terminal identification unit 320 identifies an information processing device that connects to BSS1 as a subscriber terminal and one that connects to BSS2 as a non-subscriber terminal.

More specifically, the network DB 315 can store SSID and WEP key associated with each BSS. And, in this case, the beacon generation unit 310 obtains SSID for BSS2 from the network DB 315 and directs the communication unit 300 to transmit it. The subscriber terminal identification unit 320 employs WEP key for BSS1 obtained from the network DB 315 to perform authentication of a common key. Specifically, the subscriber terminal identification unit 320 sends a predetermined random number to the information processing device and has the information processing device encrypt the random number with the device's WEP key and send it back. And the subscriber terminal identification unit 320 decodes the returned data with the WEP key in the network DB 315, compares the decoded data with the random number originally sent, and if they match, it determines that the connecting information processing device is a subscriber terminal.

In such a manner, the subscriber terminal 30 communicates with the wireless LAN communication device 20 via a communication scheme that is not released in the information provided by beacon and predetermined by subscriber users. On the contrary, the non-subscriber terminal 50 communicates with the wireless LAN communication device 20 by way of a communication scheme that is released to general users by the ISP. That communication scheme may be set in the wireless LAN communication device 20 either by the ISP or a subscriber. As a result, general users can easily utilize surplus bandwidth, while a malicious action of a non-subscriber pretending to be a subscriber is easier to be prevented because SSID used by subscribers can be hidden.

The communication timeslot setting unit 330 sets the timeslot from the restart of communication with the subscriber terminal 30 to its pause and detection of a communication request from the non-subscriber terminal 50 to be longer than the timeslot from the restart of the communication with the non-subscriber terminal 50 to its pause and detection of a communication request from the subscriber terminal 30. Further, the communication timeslot setting unit 330 sets the timeslot for communication that sends packets received from the ISP server system 60 to the subscriber terminal 30 to be longer than that for communication that sends packets received from the ISP server system 60 to the non-subscriber terminal 50. Also, the detection interval setting unit 340 sets the interval for detecting a communication request from the subscriber terminal 30 to be shorter than that for detecting a communication request from the non-subscriber terminal 50.

The access control setting unit 350 changes the setting of whether or not to permit communication between the non-subscriber terminal 50 and the wireless LAN communication device 20 based on input by a user of the subscriber terminal 30 on a configuration screen for changing settings for wireless communication from the subscriber terminal 30 to the wireless LAN communication device 20. The access control setting unit 350 may also make the setting based on the operation by the user with the configuration switch 360, which is physically provided as a piece of hardware. In response to the setting, the communication unit 300 permits or prevents connection by the non-subscriber terminal 50 to the communication line.

Permission or prevention of connection here includes not only prohibiting or permitting new connections but maintenance of managing a non-subscriber terminal that is already in communication. That is, when connection from the non-subscriber terminal 50 to the communication line is prohibited, the communication unit 300 suspends communication over BSS2 and disconnects communication already established with the non-subscriber terminal 50. Further, in this case, the communication unit 300 may preferably perform handover to have the non-subscriber terminal 50 communicate with another wireless LAN communication device.

Thus, in this embodiment, a single wireless LAN access point can serve as a plurality of wireless LAN access points by means of time division. As a result, only one setup for wireless LAN access point is needed and the configuration of the wireless LAN communication device 20 can thus be simplified. In addition, multiple BSSs can be established by updating only firmware for existing wireless LAN access points and without modifying their hardware.

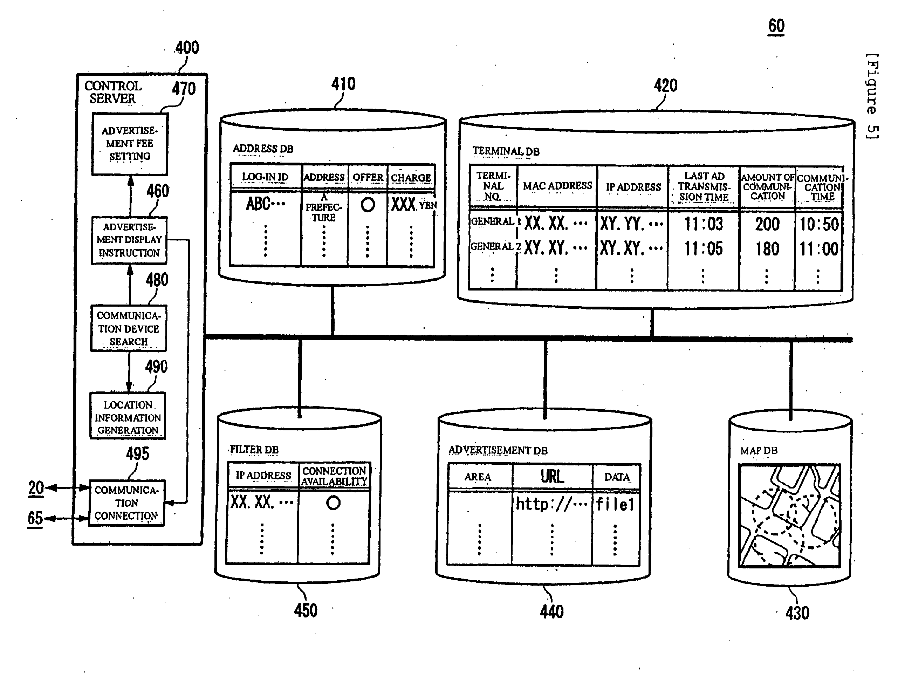

Figure 5 shows a configuration of the ISP server system 60 as an example of the server device according to the invention. The ISP server system 60 has a control server 400 that is comprised of at least one computer, address DB 410, terminal DB 420, map DB 430, advertisement DB 440, and filter DB 450. The address DB 410 stores, for each subscriber user of the communication line, the subscriber user's address, information indicating whether or not the wireless LAN communication device 20 managed by the user offers a band for use by general users, and the charge to the user. The terminal DB 420 stores, for each terminal communicating with the ISP server system 60, MAC address specific to the terminal, IP address given to the terminal, the last advertisement transmission time at which an advertisement was last displayed on the terminal screen, amount of communication with the terminal, and connection time at which the terminal started communication with the ISP server system 60.

The map DB 430 stores data that indicates areas on a map in which surplus bandwidth is offered to a general user. This data allows useful information to be provided to advertisers who think of publishing geographically targeted advertisements, for example. The advertisement DB 440 stores advertisement data representing advertisement for merchandise or services in association with areas in which those advertisements should be displayed. The advertisement DB 440 may store a URL (Uniform Resource Locator) to access to view an advertisement that is associated with areas in which the advertisement should be published.

The filter DB 450 stores blocked addresses to which general users are prohibited from communicating. A list of blocked addresses is destination IP addresses of an information processing device with which general users are prohibited from communicating, for example. ISP companies can prohibit or permit access by general users to the VPN server device 70 and IP phone server device 80 by setting blocked addresses in the filter DB 450.

As an example, an ISP company may permit a general user to communicate with the IP phone server device 80 if it has received a fee for offering the wireless LAN communication device 20 for the IP phone server device 80 from the administrator of the IP phone server device 80. Thus, the IP phone company can improve users' convenience by increasing access points and the ISP company can get revenue such as commission from the IP phone company.

The control server 400 has an advertisement display instruction unit 460, advertisement fee setting processing unit 470, communication device search unit 480, location information generation unit 490, and communication connection unit 495. The advertisement display instruction unit 460 directs the communication connection unit 495 to display an advertisement for merchandise or service on the screen of the non-subscriber terminal 50 when the non-subscriber terminal 50 connects to the communication line via the wireless LAN communication device 20. For example, the advertisement display instruction unit 460 may select data on advertisement that should be displayed in the area where the wireless LAN communication device 20 is located from the advertisement DB 440 and display it on the screen of the non-subscriber terminal 50 when the non-subscriber terminal 50 connects to a communication line via the wireless LAN communication device 20. Here, the advertisement display instruction unit 460 may determine that the address of a subscriber is the location of the wireless LAN communication device 20 that has been installed by the subscriber.

The advertisement fee setting processing unit 470 charges a subscriber an amount equal to a charge for the provision of a communication line to the subscriber by the ISP minus an amount as a function of a fee for an advertisement. For example, the advertisement fee setting processing unit 470 may charge a subscriber a charge for utilizing the communication line minus an amount that is a function of the number of times or duration the advertisement is displayed. Alternatively, the advertisement fee setting processing unit 470 may charge a subscriber a charge for the provision of the communication line minus an amount as a function of the duration the subscriber offers a communication line to a non-subscriber or the number of packets the non-subscriber user communicates. And the advertisement fee setting processing unit 470 stores the fee charged to each subscriber in the address DB 410.

As a further example, the advertisement fee setting processing unit 470 may determine a free service to be provided by the ISP to a subscriber on the basis of the fee for an advertisement and store it in the address DB 410 in association with the subscriber. More specifically, the advertisement fee setting processing unit 470 provides a subscriber with privilege points necessary for receiving free services based on the fee for advertisement, provides a free service as demanded by the subscriber, and subtract privilege points provided as the service. In such a manner, the subscriber can get appropriate profit for offering the wireless LAN communication device 20 for use by a non-subscriber.

The communication device search unit 480 searches the address DB 410 for the address of a subscriber of a communication device that is permitted to communicate with the non-subscriber terminal 50. For example, the communication device search unit 480 searches for the address "A prefecture" of a user for whom "Offer" flag is set in the address DB 410. The location information generation unit 490 generates information indicating the location of the wireless LAN communication device 20 that is permitted to communicate with a non-subscriber terminal based on the address found and stores it in the map DB 430. The communication connection unit 495 relays communication from the subscriber terminal 30 and non-subscriber terminal 50 via the wireless LAN communication device 20 to the network 65. At this point, the communication connection unit 495 may reroute the destination of the communication by the non-subscriber terminal 50 to the URL of an advertisement display server in response to directions of the advertisement display unit 460.

The communication connection unit 495 establishes different VLANs depending on whether the connecting information processing device is a subscriber terminal 30 or a non-subscriber terminal 50. In other words, the communication connection unit 495 causes the control server 400 to function as two gateway servers. And the communication connection unit 495 connects the subscriber terminal 30 to the network 65 via one gateway server. On the other hand, the communication connection unit 495 connects the non-subscriber terminal 50 to the network 65 via the other gateway server.
More specifically, the communication connection unit 495 may establish a plurality of PPPoE (Point-to-Point Protocol Over Ethernet®) sessions that are different depending on whether the source information processing device is managed by a subscriber user or not ("Ethernet" is a registered trademark).

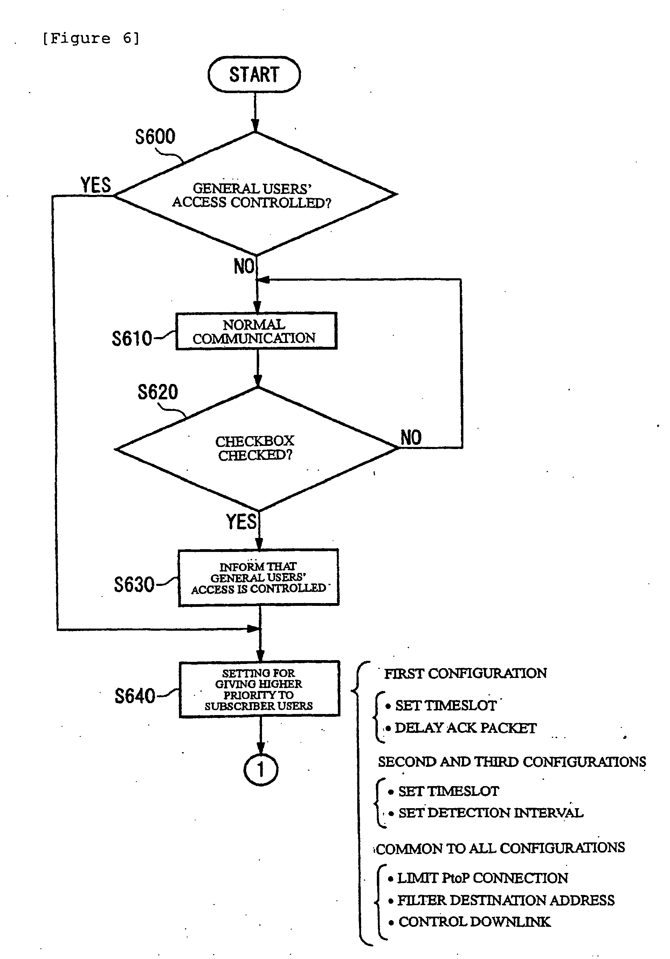

Figure 6 shows a processing flow up to when the wireless LAN communication device 20 starts communication with a non-subscriber terminal. Since the wireless LAN communication device 20 conducts almost similar processing in any of the first through third configurations, the first configuration will be described except differences among them. The wireless LAN communication unit 20 performs processing as follows when it is powered on or reset. If communication by general users is permitted (S600:YES), the wireless LAN communication device 20 passes processing to S640. Meanwhile, if communication by general users is not permitted (S600:NO), the communication unit 210 communicates normally with a subscriber terminal 30 managed by a subscriber user and does not communicate with the non-subscriber terminal 50 managed by a general user (S610).

And during normal communication, the access control setting unit 230 periodically determines whether or not a checkbox for permitting communication by general users is checked through input by a user of the subscriber terminal 30 on the screen for changing settings for wireless communication from the subscriber terminal 30 to the wireless LAN communication device 20 (S620). This determination is not necessarily performed periodically, and the checkbox being checked may be detected with event-driven control. If the checkbox is checked (S620:YES), the access control setting unit 230 informs the ISP server system 60 that it permits communication between a general user and the wireless LAN communication device 20 (S630).

The communication unit 210 then makes setting for giving a higher priority to the communication by the subscriber terminal 30 managed by a subscriber user than the non-subscriber terminal 50 managed by a general user (S640). In the first configuration, for example, the communication timeslot setting unit 220 sets a timeslot in which the relay feature of the control unit 22 is allocated for communication with the subscriber terminal 30 to be longer than that for communication with the non-subscriber terminal 50.

In the second and third configurations, the communication timeslot setting unit 330 sets a timeslot in which the communication feature of an access point is allocated to BSS1 to be longer than for BSS2. Moreover, the detection interval setting unit 340 may set the interval for detecting a communication request from the subscriber terminal 30 to be shorter than that for non-subscriber terminal 50.

As a common control in all the configurations, the communication timeslot setting unit 220 may discard at least some of packets addressed to the non-subscriber terminal 50 from the ISP server system 60 while timeslots are allocated to the subscriber terminal 30. This can reduce loss of communication packets for the subscriber terminal 30 compared to the non-subscriber terminal 50 and realize proper priority control. The communication units 210 and 300 may permit PtoP connection within a LAN for a subscriber terminal and prohibit it for a non-subscriber terminal. For example, the communication units 210 and 300 permit the subscriber terminal 30 to communicate with the printer 40 via the wireless LAN communication device 20 and prohibit the non-subscriber terminal 50 from communicating via the wireless LAN communication device 20 with other information processing devices that wirelessly communicate with the wireless LAN communication device 20. In such a way, a subscriber user can be allowed to effectively utilize the capability of the wireless LAN communication device 20 to build a LAN, while a general user is controlled to always access the ISP server system 60 and appropriate advertisements can be displayed to the general user.

As a further example, the communication units 210 and 300 may prohibit communication from the non-subscriber terminal 50 to a given blocked addresses based on information obtained from the filter DB 450. As a yet further example, if the wireless LAN communication device 20 has a port for wired connection, the wireless LAN communication device 20 handles an information processing device connected to the port as a subscriber terminal and gives higher priority to its communication than to a non-subscriber terminal.

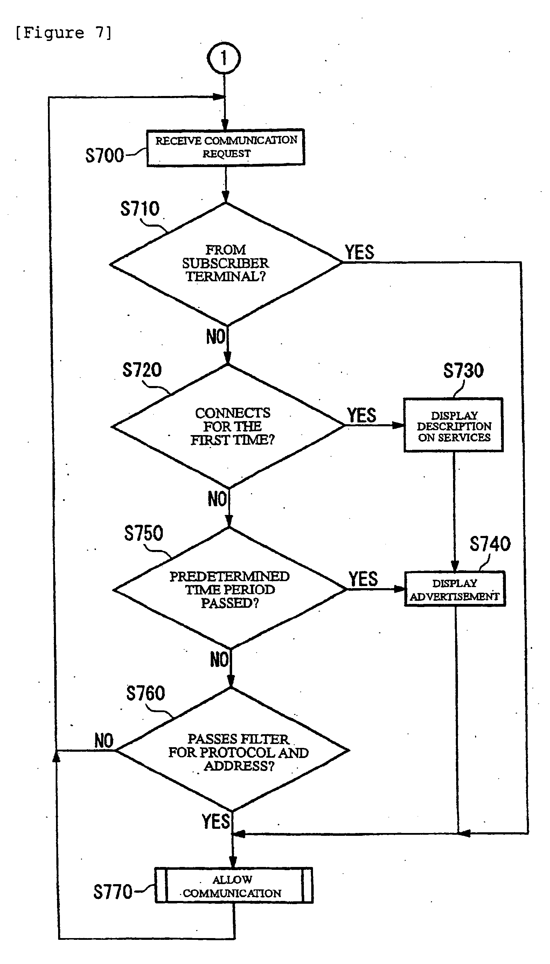

Figure 7 shows a processing flow of the wireless LAN communication device 20 that continues from Figure 6. When it receives a communication request from an information processing device (S700), the communication unit 210 determines whether or not the request is from a subscriber terminal (S710). If the request is from a subscriber terminal (S710:YES), at S770, the communication unit 210 lets the subscriber terminal connect to a communication line in preference to a non-subscriber terminal.

On the other hand, if the request is not from a subscriber terminal (S710:NO), the communication unit 210 determines whether or not the non-subscriber terminal 50, the information processing device that sent the communication request, is to connect to the communication line provided by the ISP company for the first time (S720). For example, the communication unit 210 has DHCP function for giving an IP address to an information processing device every time an information processing device connects to the wireless LAN communication device 20, and if it receives for the first time an HTTP request from an IP address that was newly given by the DHCP function, it determines that the information processing device that was given the IP address is an information processing device that connects to the communication line for the first time.

If the connection is for the first time (S720:YES), the communication unit 210 displays description on services provided by the ISP company on the screen of the non-subscriber terminal 50 (S730), and displays an advertisement specified by the advertisement display instruction unit 460 on the screen of the non-subscriber terminal 50 (S740). At this point, the communication unit 210 directs the ISP server system 60 to store the terminal number, MAC address, IP address, the time at which the advertisement was sent, amount of communication, and connection time for the non-subscriber terminal 50 in the terminal DB 420.

On the other hand, if the connection is not for the first time (S720:YES), the communication unit 210 determines whether or not a predefined time period has elapsed since the advertisement was last displayed (S750). For example, the communication unit 210 determines the time at which the advertisement was last sent by referring to the terminal DB 420 and calculates the difference between the time and the current time. And if the difference is greater than the predefined time period, it determines that the predefined time period has elapsed since the last display of the advertisement. If the predefined time period has elapsed (S750:YES), the communication unit 210 displays the advertisement specified by the advertisement display instruction unit 460 on the screen of the non-subscriber terminal 50 (S740). If the time period has not elapsed (S753:NO), the communication unit 210 determines whether or not the communication request satisfies conditions for allowing communication packets to pass that are predetermined for the communication protocol and the destination IP address (S760).

If the request does not satisfy the conditions for passing communication packets (S760:NO), the wireless LAN communication device 20 discards the communication packets corresponding to the communication request and receives the next communication request back at S700. Meanwhile, if the conditions are satisfied (S760:YES), the wireless LAN communication device 20 communicates with any of the subscriber terminal 30, printer 40, and the non-subscriber terminal 50 for a predefined duration (S770). The communication unit 210 may obtain destination IP addresses of communication packets that should not permitted to pass from the ISP server system 60 periodically (or every time the IP addresses are updated). Similarly, the communication unit 210 may periodically obtain data on advertisements to be displayed on the non-subscriber terminal 50 screen from the ISP server system 60. Now, details of communication in the second and third configurations will be described.

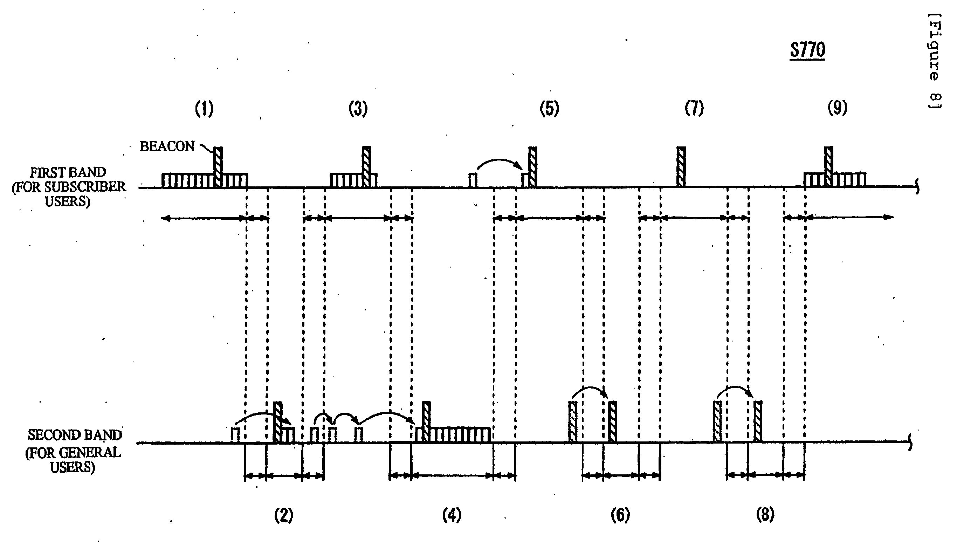

Figure 8 shows the details of communication in the second configuration of the wireless LAN communication device 20. In this configuration, the communication unit 300 uses BSS1 over a first band to wirelessly communicate with the subscriber terminal 30. The communication unit 300 also uses BSS2 over a second band to wirelessly communicate with the non-subscriber terminal 50. More specifically, the communication unit 300 first allocates a predetermined communication timeslot to communication with the subscriber terminal 30 (1). The blank rectangles in the drawing indicate that data packets are being communicated, whereas shaded rectangles represent beacon for synchronizing communication.

Then, even if communication over the first band is in progress, the communication unit 300 changes the frequency band used for communication to the second band so as to conduct the minimum communication to maintain communication with the non-subscriber terminal 50. The change of frequency band results in a duration in which wireless communication is disabled.
And, after changing the frequency band, the communication unit 300 allocates a timeslot shorter than that allocated to the subscriber terminal 30 to the communication with the non-subscriber terminal 50 (2).

During communication over the first band, the non-subscriber terminal 50 can determine that the second band is in idle state and send a communication request and the like. In communication over the first band, no response will be given to this communication request. Communication corresponding to the communication request is delayed until the communication unit 300 allocates a timeslot to the non-subscriber terminal 50.

Subsequently, the communication unit 300 changes the frequency band used for communication to the first band. And the communication unit 300 allocates a communication timeslot to the subscriber terminal 30 (3). Even if a communication request is transmitted by the non-subscriber terminal 50, initiation of communication will be sequentially delayed during communication over the first band. When communication with the subscriber terminal 30 has paused, the communication unit 300 changes the frequency band to the second band and allocates a predetermined timeslot to the non-subscriber terminal 50 (4).

Then, even during communication over the second band, the communication unit 300 determines periodically whether it has received a communication request from the subscriber terminal 30 over the first band. And the communication unit 3.00 allocates a predetermined timeslot to the subscriber terminal 30 (5). If a communication request is sent from the subscriber terminal 30 during communication over the second band, restart of communication corresponding to the request might be delayed. Subsequently, the communication unit 300 changes the frequency band to the second band (6) as before. If generation of beacon is scheduled during communication over the first band, the beacon might be delayed.

Even if the first band is in idle state, the communication unit 300 sets the interval for detecting a communication request form the subscriber terminal 30 to be shorter than that for non-subscriber terminal 50 (7) (8). And while communication with the subscriber terminal 30 is going on, the communication unit 300 sets the interval for detecting the communication request from the non-subscriber terminal 50 to be longer than when the subscriber terminal 30 is in idle state (9).

As has been described, the communication timeslot setting unit 330 sets a communication timeslot allocated to the subscriber terminal 30 to be longer than that for the non-subscriber terminal 50. The detection interval setting unit 340 sets the interval for detecting the communication request from the subscriber terminal 30 to be shorter than that for non-subscriber terminal 50. These can improve communication throughput of the subscriber terminal 30 and reduce latency.

Alternatively or additionally, the communication unit 300 may set the interval of beacon transmitted over the second band to be longer than a standard beacon interval. By setting a longer beacon interval over the second band, the wireless communication network can become hard to be newly connected. In such a manner, control of communication priority can be accomplished through easiness or difficulty of making a new connection.

Preferably, the communication unit 300 communicates in PCF (Point Coordination Function) mode in which a communication timeslot is allocated to the subscriber terminal 30 through polling. And, in DCF (Distributed Coordination Function) mode, the communication unit 300 allocates time that has not been allocated through polling as a communication timeslot for communication by the non-subscriber terminal 50 on demand from the non-subscriber terminal 50.

As an alternative, the communication unit 300 may communicate with the subscriber terminal 30 in HCF (Hybrid Coordination Function) mode that is defined by IEEE802.11e, a standard currently being established. Further, the communication unit 300 may poll a communication request from the subscriber terminal 300 with TurboCell or WORP (Wireless Outdoor Router Polling) techniques. Or the communication unit 300 may communicate with the subscriber terminal 30 with QoS (Quality of Service) technique for guaranteeing a given throughput. This can give higher priority to the subscriber terminal 30 than the non-subscriber terminal 50 appropriately also for the uplink traffic from the subscriber terminal 30 and non-subscriber terminal 50 to the network 65.

The communication timeslot setting unit 330 and detection interval setting unit 340 may dynamically vary the timeslot allocated for communication and the interval for detecting a communication request as a function of the number of currently communicating information processing devices or the amount of communication with the subscriber terminal 30. As an example, the communication timeslot setting unit 330 determines the sum of time required for transmitting beacon and communication time per slot as the lower limit of the timeslot allocated to the non-subscriber terminal 50. Also, the communication timeslot setting unit 330 determines time equal to the beacon generation interval minus the round-trip time of a polling packet multiplied by the number of the subscriber terminals 30 as the upper limit of the timeslot to be allocated to the non-subscriber terminal 50. And the communication timeslot setting unit 330 may select a given value between the lower and upper limit values based on the amount of communication with the subscriber terminal 30 and set it as the timeslot to be allocated to the non-subscriber terminal 50.

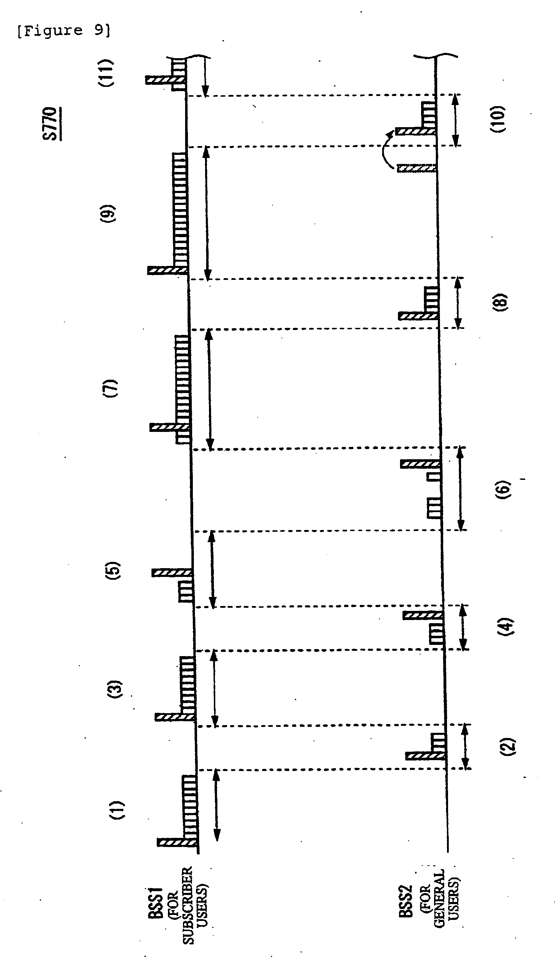

Figure 9 shows details of communication in the third configuration of the wireless LAN communication device 20. In this configuration, the communication unit 300 has the same frequency band serve both as BSS1 and BSS2 by way of time division without frequency hopping. The communication unit 300 also communicates in PCF mode in which a communication timeslot is allocated to the subscriber terminal 30 by polling. And the communication unit 300 communicates with the non-subscriber terminal 50 in DCF mode in which time that has not been allocated through polling is allocated as a timeslot for communication of the non-subscriber terminal 50 on demand from the non-subscriber terminal 50.

Specifically, the communication unit 300 first allocates a predetermined timeslot to communication with the subscriber terminal 30 (1). Even during communication with the subscriber terminal 30, the communication unit 300 periodically allocates to the non-subscriber terminal 50 a timeslot shorter than one for communication with the subscriber terminal 30 so that it maintains communication with the non-subscriber terminal 50 (2). Communication by the non-subscriber terminal 50 is suspended and communication unit 300 resumes communication with the subscriber terminal 30 (3). This gives higher priority to communication with the subscriber terminal 30 than communication with the non-subscriber terminal 50.

Similarly, the communication unit 300 allocates a communication timeslot to the subscriber terminal 30 (5). When the subscriber terminal 30 becomes idle, the communication unit 300 may start to communicate with the non-subscriber terminal 50 even if the duration of communication with the subscriber terminal 30 is less than the timeslot allocated to the subscriber terminal 30 (6). If the subscriber terminal 30 is communicating, communication of non-subscriber terminal 50 will be sequentially delayed because the interval for detecting the communication request form the non-subscriber terminal 50 is set to be longer (7) - (10).

As can be seen, according to the configuration shown, since the same frequency band is used for both BSS1 and BSS2, false detection of a channel being idle can be prevented and communication delay can be reduced. In addition, effective throughput of communication can be improved as time required for frequency hopping can be eliminated.

As an alternative to the configuration, the communication unit 300 may actively disconnect communication with the non-subscriber terminal 50 depending on the amount of communication with the subscriber terminal 30 and force the non-subscriber terminal 50 to be handed over to another wireless LAN access point. This can prevent obstruction to communication with the subscriber terminal 30 more appropriately even when the amount of communication with the subscriber terminal 30 is very large.

Preferably, the communication unit 300 communicates periodically in DCF mode also in BSS1. This allows other subscriber terminals to newly join BSS1. The communication unit 300 may alternatively set the wireless LAN communication device 20 to promiscuous mode in which every communication packets are received irrespective of BSSID and receive communication packets for both BSS1 and BSS2. This enables detection of subscriber terminals that are newly participating in BSS1 even when the communication unit 300 is communicating in DCF mode in order to communicate with BSS2.

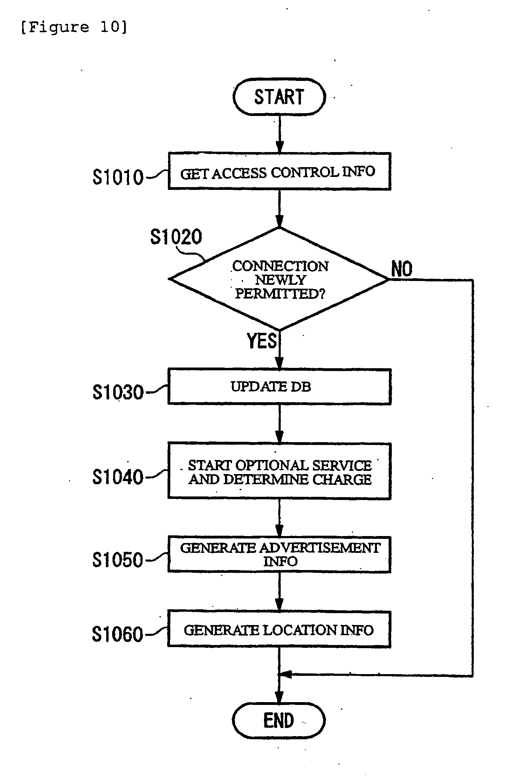

Figure 10 shows a processing flow for the ISP server system 60. The ISP server system 60 performs processing as follows for the wireless LAN communication device 20 installed at the house of communication line subscribers, e.g., periodically. The ISP server system 60 first obtains from the wireless LAN communication device 20 access control information indicating whether or not the subscriber permits general user to connect to the wireless LAN communication device 20 (S1010). And the ISP server system 60 determines whether connection by general users has been newly permitted or not (S1020).

If connection has not been newly permitted (S1020:NO), the ISP server system 60 proceeds to handle the next communication device at S1070. On the other hand, if connection has been newly permitted (S1020:YES), the ISP server system 60 updates the field indicating access control information in the address DB 410 (S1030). And the advertisement fee setting processing unit 470 updates the communication fee to be charged to the subscriber on the basis of the access control information (S1040). The advertisement fee setting processing unit 470 may alternatively start to provide an optional service to the subscriber.

Then, the advertisement display instruction unit 460 generates data on an advertisement to be displayed to general users (S1050). The advertisement display instruction unit 460 may additionally send advertisement data to the wireless LAN communication device 20 beforehand and have the wireless LAN communication device 20 store it. And the location information generation unit 490 generates information indicating the location of the wireless LAN communication device 20 that is permitted to communicate with non-subscriber terminals and stores it in the map DB 430 (S1060). The ISP server system 60 may periodically perform the process above for other wireless LAN communication devices managed by other subscribers as well.

Thus, the ISP server system 60 periodically checks whether connection to general users has been permitted or not for each communication device. And when connection is permitted, it can perform processing for advertisement display as well as for providing privilege services to the subscriber.

In addition to the above-mentioned processing, the ISP server system 60 may periodically update the terminal DB 420 in response to a connection request by a subscriber or non-subscriber, may periodically update the address DB 410 in accordance with notification from a subscriber, or may periodically update the filter DB 450 according to notification from the company that is in charge of the VPN server device 70 and IP phone server device 80. For example, when an information processing device has newly connected to the ISP server system 60, the ISP server system 60 may add an entry for the new information processing device to the terminal DB 420, and, when the information processing device has stopped communication with the ISP server system 60, it may delete the entry from the terminal DB 420. Additionally, the ISP server system 60 may store statistic information on URLs viewed by each information processing device and analyze individual user's preference from the information. This can enable display of an advertisement in which the user is likely interested.

The ISP server system 60 may periodically send contents of various databases that have been updated to the wireless LAN communication device 20 so that some of the functions provided by the ISP server system 60 are implemented in the wireless LAN communication device 20.

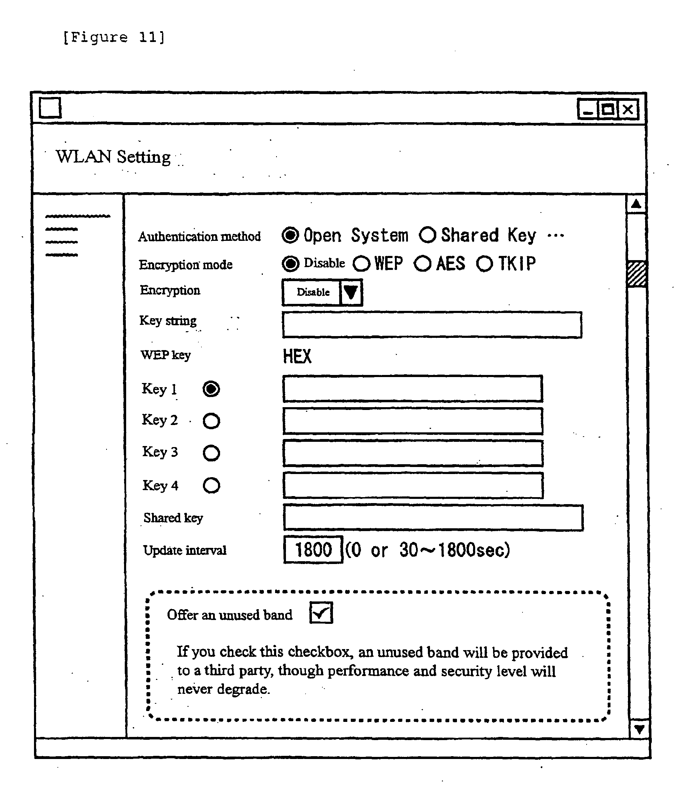

Figure 11 shows an example of screen display on the wireless LAN communication device 20 for a user to offer an unused band so as to enable communication with a non-subscriber terminal. The access control setting unit 230 displays this screen when the user makes settings for connecting the subscriber terminal 30 to a communication line. On this screen, the user can set and change the authentication scheme for wireless LAN, encryption scheme, encryption key such as WEP key, update interval of an encryption key and the like.

When setting for enabling the subscriber terminal 30 to wirelessly communicate with the wireless LAN communication device 20 has not been completed, the access control setting unit 230 "grays out" the checkbox for asking whether or not an unused band of the wireless LAN communication device 20 will be offered to general users, so that the user cannot check the box. When settings for enabling the subscriber terminal 30 to wirelessly communicate with the wireless LAN communication device 20 has been completed, the access control setting unit 230 displays the checkbox for which checking is enabled. If the checkbox is checked, the access control setting unit 230 provides an unused band of the wireless LAN communication device 20 to the non-subscriber terminal 50. Meanwhile, if the checkbox is not checked, the access control setting unit 230 blocks communication with the non-subscriber terminal 50 and the communication unit 210 does not communicate with the non-subscriber terminal 50.

Thus, the wireless LAN communication device 20 enables settings for permitting/prohibiting communication with the non-subscriber terminal 50 only after the completion of setting for enabling wireless communication between the subscriber terminal 30 and the wireless LAN communication device 20. This can prevent the subscriber from accidentally using a communication line for general users. In addition, the access control setting unit 230 may change the settings for permitting/prohibiting communication with the non-subscriber terminal 50 based on directions from an information processing device connected by a wired channel. In that case, the access control setting unit 230 preferably does not allow change of the settings that is made via a wireless communication network. This can prevent malicious actions such as to access a wireless communication network dedicated for subscribers without authorization and modify the settings.

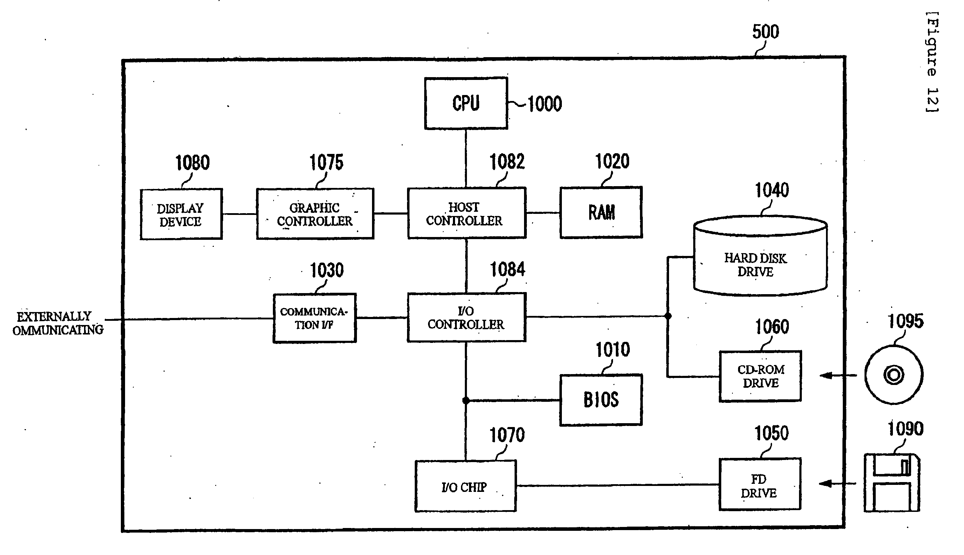

Figure 12 shows an example of hardware configuration of computer 500 that serves as the ISP server system 60. The computer 500 has a CPU peripheral portion that includes CPU 1000, RAM 1020, and graphic controller 1075 that are interconnected by host controller 1082; an I/O portion that includes communication interface 1030, hard disk drive 1040, and CD-ROM drive 1060 that are connected to the host controller 1082 by the I/O controller 1084; and a legacy I/O portion that includes BIOS 1010, flexible disk drive 1050, and I/O chip 1070 that are connected to the I/O controller 1084.

The host controller 1082 connects RAM 1020 with the CPU 1000 and graphic controller 1075 that access the RAM 1020 at a high transfer rate. The CPU 1000 operates in accordance with programs stored in BIOS 1010 and RAM 1020, controlling each component. The graphic controller 1075 obtains image data that is generated by the CPU 1000 in a frame buffer provided in RAM 1020 and displays it on display device 1080. Alternatively, the graphic controlled 1075 may internally contain a frame buffer for storing image data generated by the CPU 1000 etc.

The I/O controller 1084 connects the host controller 1082 with communication interface 1030, hard disk drive 1040, and CD-ROM drive 1060 that are relatively high-speed I/O devices. The communication interface 1030 communicates with external devices via a network. The hard disk drive 1040 stores programs and data to be used by the computer 500. The CD-ROM drive 1060 reads programs or data from the CD-ROM 1095 and provides it to the I/O chip 1070 via the RAM 1020.

Connected to the I/O controller 1084 are BIOS 1010, and relatively low-speed I/O devices such as flexible disk drive 1050 and I/O chip 1070. The BIOS 1010 contains a boot program that is executed by the CPU 1000 at the start-up of the computer 500 and programs dependent on the hardware of the computer 500. The flexible disk drive 1050 reads a program or data from the flexible disk 1090 and provides it to the I/O chip 1070 via the RAM 1020. The I/O chip 1070 connects the flexible disk 1090 and various I/O devices, e.g., via parallel port, keyboard port, and mouse port.

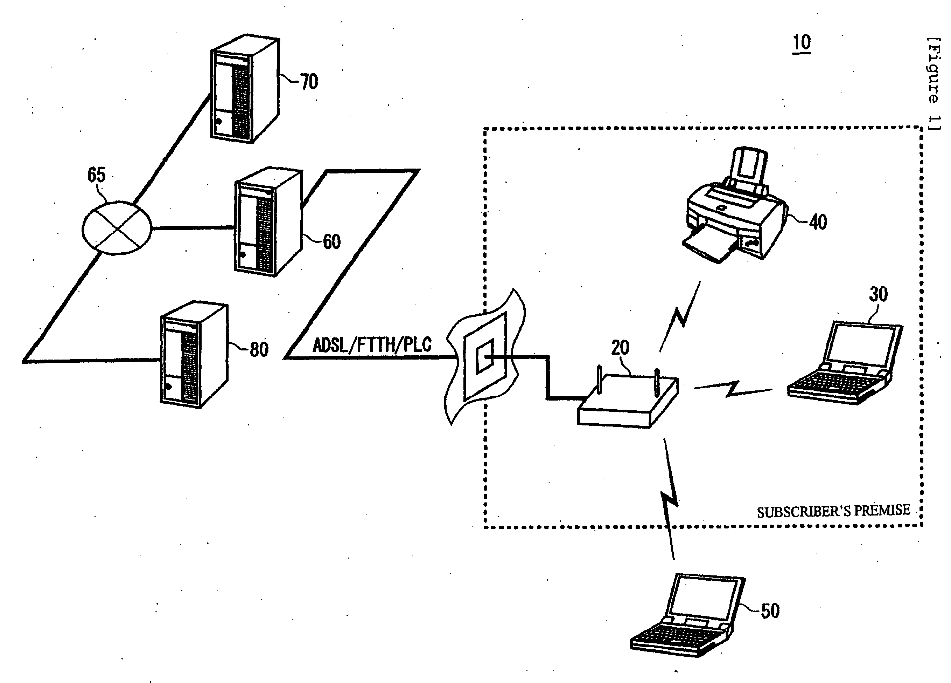

Programs provided to the computer 500 are provided by a user being stored on a storage medium such as the flexible disk 1090, CD-ROM 1095, or an IC card. The programs are read from the storage medium via the I/O chip 1070 and/or I/O controller 1084 and installed on the computer 500 to be executed. The programs read may be provided to the wireless LAN communication device 20 via a network and executed on the wireless LAN communication device 20. Operations that a program executed on the wireless LAN communication device 20 or the ISP server system 60 cause the computer 500 to perform are the same as those performed in the wireless LAN communication device 20 or ISP server system 60 as described with Figures 1 to 11, thus description is omitted.

Those programs may be stored in an external storage medium. Such storage medium includes optical recording media such as DVD and PD, magneto-optical recording media such as MD, tape media, semiconductor memory such as IC card, in addition to flexible disk 1090 and CD-ROM 1095. Also, a storage medium such as a hard disk and RAM provided on a server system that is connected to a dedicated network or the Internet can be used as a recording medium and programs can be provided to the computer 500 over a network.

As illustrated in the above embodiments, the wireless LAN communication device 20 permits communication with general users as well as subscriber users. In this process, burdensome tasks of pre-registration or authentication are not required of general users. This can provide an environment for any one to connect to the Internet for free on the street by effectively exploiting an unused band of the wireless LAN communication device 20, which is now commonplace in general households.

The wireless LAN communication device 20 gives higher priority to subscriber users' communication than general users' so that communication by subscriber users is not obstructed by general users. The wireless LAN communication device 20 also protects subscriber users' privacy by connecting general users and subscriber users to different VLANs. Further, the wireless LAN communication device 20 displays advertisements on the screen of a general user's terminal and passes on the corresponding fee to subscriber users as a rebate. As a result, charges to subscriber users can be reduced without degrading the services for subscriber users.

This enables an ISP company providing communication lines to subscriber users to get more opportunities to advertise themselves to general users and to get advertisement revenue from other entities, and also to increase their subscribers.

## Claims

1. A communication apparatus (10) for connecting each of a plurality of information processing apparatuses (30, 50) to a communication line provided by an ISP (Internet Service Provider) by communicating with each of said plurality of information processing apparatuses, **characterised by** comprising:
a subscriber terminal determination unit (200) for determining whether or not each of said plurality of information processing apparatuses is managed by a subscriber to said ISP who has been authorized based on a contract with said ISP to connect to said communication line by installing the communication apparatus;
a communication unit (210) for communicating with each of said plurality of information processing apparatuses giving a higher priority to a subscriber terminal (30) that is an information processing apparatus managed by said subscriber than to a non-subscriber terminal (50) that is an information processing apparatus not being said subscriber terminal; and
a communication authorization setting unit (230) for changing the setting of whether or not to authorize communication between said non-subscriber terminal and the communication apparatus in accordance with input by a user of said subscriber terminal on a setting screen for changing settings of communication from said subscriber terminal to the communication apparatus.

2. A communication apparatus (10) as claimed in Claim 1, wherein if said communication unit (210) detects data to communicate to said subscriber terminal (30), said communication unit communicates with said subscriber terminal, and if said communication unit detects no data to communicate to said subscriber terminal, it communicates with said non-subscriber (50) terminal so that said communication unit communicates with each of said plurality of information processing apparatuses giving higher priority to said subscriber terminal than to said non-subscriber terminal.

3. A communication apparatus (10) as claimed in Claim 1, wherein said communication unit uses each of a plurality of different wireless communication networks to communicate with each of a plurality of information processing apparatuses (30, 50), periodically determines whether or not said communication unit has received a communication request from said subscriber terminal (30) in a first wireless communication network (24), and periodically determines whether or not said communication unit has received a communication request from said non-subscriber terminal (50) in a second wireless communication network (36),
further comprising a detection interval setting unit for setting the interval for detecting a communication request from said subscriber terminal to be shorter than the interval for detecting a communication request from said non-subscriber terminal.

4. A communication apparatus (10) as claimed in Claim 1, wherein said communication unit (210) uses each of a plurality of different wireless communication networks (24, 26) to communicate with each of a plurality of information processing apparatuses (30, 50), periodically determines whether or not said communication unit has received a communication request from said subscriber terminal (30) in a first wireless communication network (24), and periodically determines whether or not said communication unit has received a communication request from said non-subscriber terminal (50) in a second wireless communication network (26),
further comprising a communication timeslot setting unit for setting the timeslot from the restart of communication with said subscriber terminal to its pause and detection of a communication request from said non-subscriber terminal to be longer than the timeslot from the restart of communication with said non-subscriber terminal to its pause and detection of a communication request from said subscriber terminal.

5. A communication apparatus (10) as claimed in Claim 1, wherein said communication unit (210) allocates a communication timeslot to each said subscriber terminal by polling and allocates time that has not been allocated by said polling as a timeslot for communication by said non-subscriber terminal (50) on demand from said non-subscriber terminal.

6. A communication apparatus (10) as claimed in Claim 1, wherein said communication unit (210) communicates with each of said plurality of information processing apparatuses (30, 50) in TCP mode and delays the arrival of ACK packet, which indicates that a TCP packet has arrived, received by said non-subscriber terminal (50) relative to said subscriber terminal (30) so that said communication unit gives higher priority to communication by said subscriber terminal than communication by said non-subscriber terminal.

7. A communication apparatus (10) as claimed in Claim 1, wherein among a plurality of information processing apparatuses (30, 50) communicating with the communication apparatus, said communication unit permits said subscriber terminal (30) to communicate with other subscriber terminals via the communication apparatus and prohibits said non-subscriber terminal (50) from communicating with other information processing apparatuses via the communication apparatus.

8. A communication apparatus (10) as claimed in Claim 1, wherein said communication unit (210) prohibits communication from said non-subscriber terminal (50) to predetermined blocked addresses and permits communication from said subscriber terminal (30) to said blocked addresses.

9. A communication apparatus (10) as claimed in Claim 1, wherein said subscriber terminal identification unit (20) determines that an information processing apparatus is said subscriber terminal (30) if the information processing apparatus performs encrypted communication that is based on an encryption key defined between the communication apparatus and said subscriber terminal.

10. A communication apparatus (10) as claimed in Claim 1, wherein said communication unit uses each of a plurality of wireless communication networks (24, 26) that have different network identification information to communicate with each of a plurality of information processing apparatuses (30, 50),
further comprising a beacon generation unit (240, 250) for transmitting beacon that includes identification information for a second wireless communication network (26) to information processing apparatuses within the coverage area of said second wireless communication network and transmitting beacon that does not include identification information for a first wireless communication network (24) to information processing apparatuses within the coverage area of said first wireless communication network, and
wherein said subscriber terminal identification unit identifies an information processing apparatus that connects to said second wireless communication network as said non-subscriber terminal (50) and an information processing apparatus (30) that connects to said first wireless communication network as said subscriber terminal.

11. A communication apparatus (10) as claimed in Claim 1, wherein said subscriber terminal identification unit (200) identifies an information processing apparatus as said subscriber terminal (30) if the MAC (Media Access Control) address specific to a destination information processing apparatus corresponds with the MAC address of said subscriber terminal that has been pre-registered.

12. A communication apparatus (10 as claimed in Claim 1, further comprising an access control setting unit (230) for changing the setting of whether to permit or prohibit communication between said non-subscriber terminal (50) and the communication apparatus in accordance with directions from an information processing apparatus that is connected through a wired channel.

13. A communication apparatus (10 as claimed in Claim 1, further comprising a configuration switch (260) for setting permission/prohibition of communication between said non-subscriber terminal (50) and the communication apparatus.

14. A communication method using a communication apparatus that connects each of a plurality of information processing apparatuses to a communication line provided by an ISP (Internet Service Provider) by communicating each of said plurality of information processing apparatuses, **characterised by** comprising:
a subscriber terminal determination step of determining whether or not each of said plurality of information processing apparatuses is managed by a subscriber to said ISP who has been authorized based on a contract with said ISP to connect to said communication line by installing the communication apparatus;
a communication step of communicating with each of said plurality of information processing apparatuses giving a higher priority to a subscriber terminal that is an information processing apparatus managed by said subscriber than to a non-subscriber terminal that is an information processing apparatus not being said subscriber terminal; and
a communication authorization setting step of changing the setting of whether or not to authorize communication between said non-subscriber terminal and the communication apparatus in accordance with input by a user of said subscriber terminal on a setting screen for changing settings of communication from said subscriber terminal to the communication apparatus.

15. A computer program comprising instructions for carrying out all the steps of the method of claim 14, when said computer program is executed on a computer sytem.

## Patentansprüche

1. Datenübertragungsvorrichtung (10) zum Verbinden jeder aus einer Vielzahl von Datenverarbeitungsvorrichtungen (30, 50) mit einer von einem Internet-Dienstanbieter (Internet Service Provider, ISP) bereitgestellten Datenübertragungsleitung durch Austauschen von Daten mit jeder aus der Vielzahl von Datenverarbeitungsvorrichtungen, **dadurch gekennzeichnet, dass** die Datenübertragungsvorrichtung Folgendes umfasst:
eine Teilnehmerendgeräte-Ermittlungseinheit (200) zum Ermitteln, ob jede aus der Vielzahl von Datenverarbeitungsvorrichtungen von einem beim ISP abonnierten Teilnehmer betrieben wird, der auf der Grundlage eines Vertrages mit dem ISP für den Zugang zur der Datenübertragungsleitung durch Installieren der Datenübertragungsvorrichtung berechtigt ist;
eine Datenübertragungseinheit (210) zum Austauschen von Daten mit jeder aus der Vielzahl von Datenverarbeitungsvorrichtungen, die einem Teilnehmerendgerät (30), bei dem es sich um eine von dem Teilnehmer betriebene Datenverarbeitungsvorrichtung handelt, eine höhere Priorität zuweist als einem Endgerät (50) eines nicht beim Betreiber abonnierten Teilnehmers (non-subscriber terminal), wenn es sich bei dem Endgerät um eine Datenverarbeitungsvorrichtung handelt, die nicht das Teilnehmerendgerät ist; und
eine Datenübertragungs-Berechtigungseinstelleinheit (230) zum Ändern der Einstellung, ob die Datenübertragung zwischen dem Endgerät eines nicht abonnierten Teilnehmers und der Datenübertragungsvorrichtung gemäß der Eingabe eines Benutzers des Teilnehmerendgerätes auf einem Eingabebildschirm zum Ändern der Einstellungen für die Datenübertragung vom Teilnehmerendgerät an die Datenübertragungsvorrichtung zugelassen wird.

2. Datenübertragungsvorrichtung (10) nach Anspruch 1, wobei die Datenübertragungseinheit (210) Daten mit dem Teilnehmerendgerät austauscht, wenn sie an das Teilnehmerendgerät (30) zu übertragende Daten erkennt, und Daten mit dem Endgerät (50) eines nicht abonnierten Teilnehmers austauscht, wenn sie keine an das Teilnehmerendgerät zu übertragenden Daten erkennt, sodass die Datenübertragungseinheit Daten mit jeder aus der Vielzahl von Datenverarbeitungsvorrichtungen austauscht und dabei dem Teilnehmerendgerät eine höhere Priorität zuweist als dem nicht Endgerät eines nicht abonnierten Teilnehmers.

3. Datenübertragungsvorrichtung (10) nach Anspruch 1, wobei die Datenübertragungseinheit zum Austauschen von Daten mit jeder aus einer Vielzahl von Datenverarbeitungsvorrichtungen (30, 50) jedes aus einer Vielzahl von verschiedenen drahtlosen Datenübertragungsnetzen nutzt, periodisch ermittelt, ob die Datenübertragungseinheit in einem ersten drahtlosen Datenübertragungsnetz (24) eine Datenübertragungsanforderung vom Teilnehmerendgerät (30) empfangen hat, und periodisch ermittelt, ob die Datenübertragungseinheit in einem zweiten drahtlosen Datenübertragungsnetz (36) eine Datenübertragungsanforderung von einem Endgerät (50) eines nicht abonnierten Teilnehmers empfangen hat,
wobei die Datenübertragungsvorrichtung ferner eine Intervall-Einstelleinheit umfasst, um das Intervall für das Erkennen einer Datenübertragungsanforderung vom Teilnehmerendgerät kürzer einzustellen als das Intervall für das Erkennen einer Datenübertragungsanforderung von einem Endgerät eines nicht abonnierten Teilnehmers.

4. Datenübertragungsvorrichtung (10) nach Anspruch 1, wobei die Datenübertragungseinheit (210) zum Austauschen von Daten mit jeder aus einer Vielzahl von Datenverarbeitungsvorrichtungen (30, 50) jedes aus einer Vielzahl von verschiedenen drahtlosen Datenübertragungsnetzen (24, 26) nutzt, periodisch ermittelt, ob die Datenübertragungseinheit in einem ersten drahtlosen Datenübertragungsnetz (24) eine Datenübertragungsanforderung vom Teilnehmerendgerät (30) empfangen hat, und periodisch ermittelt, ob die Datenübertragungseinheit in einem zweiten drahtlosen Datenübertragungsnetz (26) eine Datenübertragungsanforderung von einem Endgerät (50) eines nicht abonnierten Teilnehmers empfangen hat,
wobei die Datenübertragungsvorrichtung ferner eine Einstelleinheit für den Zeitschlitz der Datenübertragung umfasst, um den Zeitschlitz vom Wiederbeginn bis zur Unterbrechung des Datenaustauschs mit dem Teilnehmerendgerät und zum Erkennen einer Datenübertragungsanforderung von dem Endgerät eines nicht abonnierten Teilnehmers länger einzustellen als den Zeitschlitz vom Wiederbeginn bis zur Unterbrechung des Datenaustauschs mit dem Endgerät des nicht abonnierten Teilnehmers und zum Erkennen einer Datenübertragungsanforderung vom Teilnehmerendgerät.

5. Datenübertragungsvorrichtung (10) nach Anspruch 1, wobei die Datenübertragungseinheit (210) jedem Teilnehmerendgerät durch Sendeaufruf einen Zeitschlitz zur Datenübertragung zuweist, wobei es eine Zeitdauer zuweist, die durch den Sendeaufruf nicht als Zeitschlitz für die Datenübertragung durch das Endgerät (50) eines nicht abonnierten Teilnehmers auf Anforderung von dem Endgerät eines nicht abonnierten Teilnehmers zugewiesen wurde.

6. Datenübertragungsvorrichtung (10) nach Anspruch 1, wobei die Datenübertragungseinheit (210) Daten mit jeder aus der Vielzahl von Datenverarbeitungsvorrichtungen (30, 50) im TCP-Modus austauscht und die Ankunft eines ACK-Pakets, welches anzeigt, dass ein durch das Endgerät (50) eines nicht abonnierten Teilnehmers empfangenes TCP-Paket eingetroffen ist, gegenüber dem Teilnehmerendgerät (30) verzögert, sodass die Datenübertragungseinheit der Datenübertragung durch das Teilnehmerendgerät eine höhere Priorität zuweist als der Datenübertragung durch das Endgerät eines nicht abonnierten Teilnehmers.

7. Datenübertragungsvorrichtung (10) nach Anspruch 1, wobei die Datenübertragungseinheit aus einer Vielzahl von mit der Datenübertragungsvorrichtung Daten austauschender Datenverarbeitungsvorrichtungen (30, 50) dem Teilnehmerendgerät (30) erlaubt, über die Datenübertragungsvorrichtung mit anderen Teilnehmerendgeräten Daten auszutauschen, und das Endgerät (50) eines nicht abonnierten daran hindert, über die Datenübertragungsvorrichtung Daten mit anderen Datenverarbeitungsvorrichtungen auszutauschen.

8. Datenübertragungsvorrichtung (10) nach Anspruch 1, wobei die Datenübertragungseinheit (210) die Datenübertragung von dem Endgerät (50) eines nicht abonnierten Teilnehmers an vorgegebene gesperrte Adressen verhindert und die Datenübertragung vom Teilnehmerendgerät (30) an die gesperrten Adressen erlaubt.

9. Datenübertragungsvorrichtung (10) nach Anspruch 1, wobei die Teilnehmerendgerät-Identifizierungseinheit (20) ermittelt, ob es sich bei einer Datenverarbeitungsvorrichtung um das Teilnehmerendgerät (30) handelt, wenn die Datenverarbeitungsvorrichtung eine verschlüsselte Datenübertragung auf der Grundlage eines Chiffrierschlüssels durchführt, der zwischen der Datenübertragungsvorrichtung und dem Teilnehmerendgerät definiert ist.

10. Datenübertragungsvorrichtung (10) nach Anspruch 1, wobei die Datenübertragungseinheit jedes aus einer Vielzahl von drahtlosen Datenübertragungsnetzen (24, 26) nutzt, die zum Austauschen von Daten mit jedem aus einer Vielzahl von Datenverarbeitungsvorrichtungen (30, 50) verschiedene Netzkenndaten aufweisen,
wobei die Datenübertragungsvorrichtung ferner eine Kennungserzeugungseinheit (240, 250) zum Senden einer Kennung an Datenverarbeitungsvorrichtungen innerhalb des Versorgungsbereichs eines zweiten drahtlosen Datenübertragungsnetzes, die Kenndaten für das zweite drahtlose Datenübertragungsnetz (26) beinhaltet, und zum Senden einer Kennung an Datenverarbeitungsvorrichtungen innerhalb des Versorgungsbereichs eines ersten drahtlosen Datenübertragungsnetzes (24) umfasst, die keine Kenndaten für das erste drahtlose Datenübertragungsnetz beinhaltet, und
wobei die Teilnehmerendgerät-Identifizierungseinheit eine Datenverarbeitungsvorrichtung identifiziert, die als Endgerät (50) eines nicht abonnierten Teilnehmers mit dem zweiten drahtlosen Datenübertragungsnetz verbunden wird, und eine Datenverarbeitungsvorrichtung identifiziert, die als Teilnehmerendgerät (30) mit dem ersten drahtlosen Datenübertragungsnetz verbunden wird.

11. Datenübertragungsvorrichtung (10) nach Anspruch 1, wobei die Teilnehmerendgerät-Identifizierungseinheit (200) eine Datenverarbeitungsvorrichtung als Teilnehmerendgerät (30) identifiziert, wenn die für eine Ziel-Datenverarbeitungsvorrichtung spezifische MAC-Adresse (Media Access Control, Medienzugriffssteuerung) der zuvor registrierten MAC-Adresse des Teilnehmerendgerätes entspricht.

12. Datenübertragungsvorrichtung (10) nach Anspruch 1, die ferner eine Zugriffssteuerungs-Einstelleinheit (230) zum Ändern der Einstellung umfasst, ob der Datenaustausch zwischen dem Endgerät eines nicht abonnierten Teilnehmers (50) und der Datenübertragungsvorrichtung gemäß den Vorgaben einer über einen leitungsgebundenen Kanal angeschlossenen Datenverarbeitungsvorrichtung zugelassen oder verhindert werden soll.

13. Datenübertragungsvorrichtung (10) nach Anspruch 1, die ferner einen Konfigurationsschalter (260) zum Einstellen der Zulassung/Verhinderung der Datenübertragung zwischen dem Endgerät (50) eines nicht abonnierten Teilnehmers und der Datenübertragungsvorrichtung umfasst.

14. Datenübertragungsverfahren, das eine Datenübertragungsvorrichtung verwendet, die durch Austausch von Daten mit jeder aus einer Vielzahl von Datenverarbeitungsvorrichtungen jede aus der Vielzahl von Datenverarbeitungsvorrichtungen mit einer von einem Internet-Dienstanbieter (ISP) bereitgestellten Datenübertragungsleitung verbindet, **dadurch gekennzeichnet, dass** das Verfahren Folgendes umfasst:
den Schritt des Ermittelns des Teilnehmerendgeräts, in dem ermittelt wird, ob jede aus der Vielzahl von Datenverarbeitungsvorrichtungen von einem beim ISP abonnierten Teilnehmer betrieben wird, der auf der Grundlage eines Vertrages mit dem ISP für den Zugang zu der Datenübertragungsleitung durch Installieren der Datenübertragungsvorrichtung berechtigt ist;
den Schritt des Austauschens von Daten mit jeder aus der Vielzahl von Datenverarbeitungsvorrichtungen, um einem Teilnehmerendgerät, bei dem es sich um eine von dem Teilnehmer betriebene Datenverarbeitungsvorrichtung handelt, eine höhere Priorität zuzuweisen als einem Endgerät eines nicht abonnierten Teilnehmers, bei dem es sich nicht um ein Teilnehmerendgerät handelt; und
den Schritt des Einstellens der Datenübertragungsberechtigung durch Ändern der Einstellung, ob der Datenaustausch zwischen dem Endgerät eines nicht abonnierten Teilnehmers und der Datenübertragungsvorrichtung zugelassen wird, gemäß der Eingabe eines Benutzers des Teilnehmersendgeräts auf einem Eingabebildschirm zum Ändern der Einstellungen für die Datenübertragung vom Teilnehmerendgerät an die Datenübertragungsvorrichtung.

15. Computerprogramm, das Anweisungen zum Ausführen aller Schritte des Verfahrens nach Anspruch 14 umfasst, wenn das Computerprogramm auf einem Computersystem ausgeführt wird.

## Revendications

1. Dispositif de communication (10) destiné à connecter chaque dispositif d'une pluralité de dispositifs de traitement d'informations (30, 50) à une ligne de communication fournie par un fournisseur de services Internet (ISP) en communiquant avec chaque dispositif de ladite pluralité de dispositifs de traitement d'informations, **caractérisé par** le fait de comprendre :
une unité de détermination de terminal d'abonné (200) destinée à déterminer si chaque dispositif de ladite pluralité de dispositifs de traitement d'informations est géré ou non par un abonné audit fournisseur ISP qui a été autorisé sur la base d'un contrat avec ledit fournisseur ISP à se connecter à ladite ligne de communication en installant le dispositif de communication,
une unité de communication (210) destinée à communiquer avec chaque dispositif de ladite pluralité de dispositifs de traitement d'informations en donnant une priorité plus élevée à un terminal d'abonné (30) qui est un dispositif de traitement d'informations géré par ledit abonné qu'à un terminal de non-abonné (50) qui est un dispositif de traitement d'informations qui n'est pas ledit terminal d'abonné, et
une unité de paramétrage d'autorisation de communication (230) destinée à modifier le paramétrage consistant à autoriser ou non une communication entre ledit terminal de non-abonné et le dispositif de communication en fonction d'une entrée de l'utilisateur dudit terminal d'abonné sur un écran de paramétrage destiné à modifier les paramétrages d'une communication dudit terminal d'abonné au dispositif de communication.

2. Dispositif de communication (10) selon la revendication 1, dans lequel si ladite unité de communication (210) détecte des données à communiquer audit terminal d'abonné (30), ladite unité de communication communique avec ledit terminal d'abonné, et si ladite unité de communication ne détecte pas de données à communiquer audit terminal d'abonné, elle communique avec ledit terminal de non-abonné (50) de sorte que ladite unité de communication communique avec chaque dispositif de ladite pluralité de dispositifs de traitement d'informations en donnant une priorité plus élevée audit terminal d'abonné qu'audit terminal de non-abonné.

3. Dispositif de communication (10) selon la revendication 1, dans lequel ladite unité de communication utilise chaque réseau d'une pluralité de réseaux de communication sans fil différents pour communiquer avec chaque dispositif d'une pluralité de dispositifs de traitement d'informations (30, 50), détermine périodiquement si ladite unité de communication a reçu ou non une demande de communication provenant dudit terminal d'abonné (30) dans un premier réseau de communication sans fil (24), et détermine périodiquement si ladite unité de communication a reçu ou non une demande de communication provenant dudit terminal de non-abonné (50) dans un deuxième réseau de communication sans fil (36),
comprenant en outre une unité de paramétrage d'intervalle de détection destinée à paramétrer l'intervalle de détection d'une demande de communication provenant dudit terminal d'abonné pour qu'il soit plus court que l'intervalle de détection d'une demande de communication provenant dudit terminal de non-abonné.

4. Dispositif de communication (10) selon la revendication 1, dans lequel ladite unité de communication (210) utilise chaque réseau d'une pluralité de réseaux de communication sans fil différents (24, 26) pour communiquer avec chaque dispositif d'une pluralité de dispositifs de traitement d'informations (30, 50), détermine périodiquement si ladite unité de communication a reçu ou non une demande de communication provenant dudit terminal d'abonné (30) dans un premier réseau de communication sans fil (24), et détermine périodiquement si ladite unité de communication a reçu ou non une demande de communication provenant dudit terminal de non-abonné (50) dans un deuxième réseau de communication sans fil (26),
comprenant en outre une unité de paramétrage de tranche de temps de communication destinée à paramétrer la tranche de temps entre le redémarrage d'une communication avec ledit terminal d'abonné et sa pause et la détection d'une demande de communication provenant dudit terminal d'abonné pour qu'elle soit plus longue que la tranche de temps entre le redémarrage d'une communication avec ledit terminal de non-abonné et sa pause et la détection d'une demande de communication provenant dudit terminal d'abonné.

5. Dispositif de communication (10) selon la revendication 1, dans lequel ladite unité de communication (210) alloue une tranche de temps de communication à chaque dit terminal d'abonné par interrogation et alloue le temps qui n'a pas été alloué par ladite interrogation comme tranche de temps de communication par ledit terminal de non-abonné (50) sur demande dudit terminal de non-abonné.

6. Dispositif de communication (10) selon la revendication 1, dans lequel ladite unité de communication (210) communique avec chaque dispositif de ladite pluralité de dispositifs de traitement d'informations (30, 50) en mode TCP et retarde l'arrivée d'un paquet ACK, ce qui indique qu'un paquet TCP est arrivé, reçu par ledit terminal de non-abonné (50) par rapport audit terminal d'abonné (30) de sorte que ladite unité de communication donne une priorité plus élevée à une communication par ledit terminal d'abonné qu'à une communication par ledit terminal de non-abonné.

7. Dispositif de communication (10) selon la revendication 1, dans lequel, parmi une pluralité de dispositifs de traitement d'informations (30, 50) communiquant avec le dispositif de communication, ladite unité de communication permet audit terminal d'abonné (30) de communiquer avec d'autres terminaux d'abonnés par le biais du dispositif de communication et empêche ledit terminal de non-abonné (50) de communiquer avec d'autres dispositifs de traitement d'informations par le biais du dispositif de communication.

8. Dispositif de communication (10) selon la revendication 1, dans lequel ladite unité de communication (210) empêche une communication à partir dudit terminal de non-abonné (50) vers des adresses bloquées prédéterminées et permet une communication à partir dudit terminal d'abonné (30) vers lesdites adresses bloquées.

9. Dispositif de communication (10) selon la revendication 1, dans lequel ladite unité d'identification de terminal d'abonné (20) détermine qu'un dispositif de traitement d'informations est ledit terminal d'abonné (30) si le dispositif de traitement d'informations exécute une communication cryptée qui est basée sur une clé de cryptage définie entre le dispositif de communication et ledit terminal d'abonné.

10. Dispositif de communication (10) selon la revendication 1, dans lequel ladite unité de communication utilise chaque réseau d'une pluralité de réseaux de communication sans fil (24, 26) qui comportent des informations d'identification de réseau différentes pour communiquer avec chaque dispositif d'une pluralité de dispositifs de traitement d'informations (30, 50),
comprenant en outre une unité de génération de balise (240, 250) destinée à transmettre une balise qui comprend des informations d'identification pour un deuxième réseau de communication sans fil (26) aux dispositifs de traitement d'informations dans la zone de couverture dudit deuxième réseau de communication sans fil et à transmettre une balise qui ne comprend pas d'informations d'identification pour un premier réseau de communication sans fil (24) aux dispositifs de traitement d'informations dans la zone de couverture dudit premier réseau de communication sans fil, et
dans lequel ladite unité d'identification de terminal d'abonné identifie un dispositif de traitement d'informations qui se connecte audit deuxième réseau de communication sans fil comme ledit terminal de non-abonné (50) et un dispositif de traitement d'informations (30) qui se connecte audit premier réseau de communication sans fil comme ledit terminal d'abonné.

11. Dispositif de communication (10) selon la revendication 1, dans lequel ladite unité d'identification de terminal d'abonné (200) identifie un dispositif de traitement d'informations comme ledit terminal d'abonné (30) si l'adresse de commande d'accès au support (MAC) spécifique à un dispositif de traitement d'informations de destination correspond à l'adresse MAC dudit terminal d'abonné qui a été préenregistrée.

12. Dispositif de communication (10) selon la revendication 1, comprenant en outre une unité de paramétrage de commande d'accès (230) destinée à modifier le paramétrage du fait de permettre ou d'empêcher une communication entre ledit terminal de non-abonné (50) et le dispositif de communication en fonction d'indications provenant d'un dispositif de traitement d'informations qui est connecté par le biais d'un canal câblé.

13. Dispositif de communication (10) selon la revendication 1, comprenant en outre un commutateur de configuration (260) destiné à paramétrer l'autorisation/l'interdiction d'une communication entre ledit terminal de non-abonné (50) et le dispositif de communication.

14. Procédé de communication utilisant un dispositif de communication qui connecte chaque dispositif d'une pluralité de dispositifs de traitement d'informations à une ligne de communication fournie par un fournisseur de services Internet (ISP) en communiquant avec chaque dispositif de ladite pluralité de dispositifs de traitement d'informations, **caractérisé par** le fait de comprendre :
une étape de détermination de terminal d'abonné consistant à déterminer si chaque dispositif de ladite pluralité de dispositifs de traitement d'informations est géré ou non par un abonné audit fournisseur ISP qui a été autorisé sur la base d'un contrat avec ledit fournisseur ISP à se connecter à ladite ligne de communication en installant le dispositif de communication,
une étape de communication consistant à communiquer avec chaque dispositif de ladite pluralité de dispositifs de traitement d'informations en donnant une priorité plus élevée à un terminal d'abonné qui est un dispositif de traitement d'informations géré par ledit abonné qu'à un terminal de non-abonné qui est un dispositif de traitement d'informations qui n'est pas ledit terminal d'abonné, et
une étape de paramétrage d'autorisation de communication consistant à modifier le paramétrage consistant à autoriser ou non une communication entre ledit terminal de non-abonné et le dispositif de communication en fonction d'une entrée de l'utilisateur dudit terminal d'abonné sur un écran de paramétrage destiné à modifier les paramétrages d'une communication dudit terminal d'abonné au dispositif de communication.

15. Programme informatique comprenant des instructions destinées à exécuter la totalité des étapes du procédé de la revendication 14, lorsque ledit programme informatique est exécuté sur un système informatique.
